(19)

Europäisches Patentamt

European Patent Office

Office européen des brevets

(11) **EP 3 502 762 A1**

(12) **EUROPEAN PATENT APPLICATION**

(43) Date of publication:
**26.06.2019 Bulletin 2019/26**

(21) Application number: **18204625.0**

(22) Date of filing: **06.11.2018**

(51) Int Cl.:
**G02B 27/00** (2006.01)       **G02B 9/16** (2006.01)
**G02B 9/34** (2006.01)       **G02B 25/00** (2006.01)
**G02B 27/01** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2017   CN 201711362602**

(71) Applicant: **Coretronic Corporation**
**Hsin-Chu 300 (TW)**

(72) Inventors:
• **KUO, TAO-HUNG**
  **300 Hsin-Chu (TW)**
• **CHENG, CHUAN-TE**
  **300 Hsin-Chu (TW)**

(74) Representative: **Ter Meer Steinmeister & Partner**
**Patentanwälte mbB**
**Nymphenburger Straße 4**
**80335 München (DE)**

(54) **DISPLAY**

(57)     A display including an optical lens and a light valve is provided. The optical lens includes a first lens, a second lens, and a third lens arranged in sequence from a light emitting side to a light incident side. The light valve is disposed at the light incident side. The light valve provides an image beam. The optical lens is configured to receive the image beam. The image beam forms a stop at the light emitting side. The stop has the smallest cross-sectional area of a beam shrinkage of the image beam. A range of an OPD of the image beam on an active surface of the light valve is $-2.0\lambda < OPD < 2.0\lambda$, wherein the OPD is an optical path difference at each field of view, and $\lambda$ is a wavelength of each color light. The display of the invention has the advantages of small size, light weight, large viewing angle, and high resolution.

FIG. 1

EP 3 502 762 A1

## Description

This application claims the priority of China application serial no. 201711362602.1, filed on December 18, 2017.

BACKGROUND OF THE INVENTION

Field of the Invention

The invention relates to a display, and particularly relates to a display having an optical lens.

Description of Related Art

A display having a waveguide (waveguide display) can be divided into with a self-luminous panel structure, a transmission-type panel structure, and a reflection-type panel structure according to the type of image source. In the waveguide display with the self-luminous or transmission-type panel structure, an image beam provided by the aforementioned various forms of panel passes through an optical lens, and enters into the waveguide via a coupling inlet. Then, the image beam is transmitted to a coupling outlet in the waveguide, and the image beam is projected to the position of human eyes to form an image. In the waveguide display with the reflection-type panel structure, after an illumination beam provided by light source is transmitted by an illumination optical device, the illumination beam is irradiated onto the reflection-type panel by an illumination prism. The reflection-type panel converts the illumination beam into the image beam. Thus, the reflection-type panel transmits the image beam to the optical lens, and the image beam is guided into the waveguide passing through the optical lens. Then, the image beam is transmitted to a coupling outlet in the waveguide, and the image beam is projected to the position of human eyes. The optical lens will make the image generated by the image source (panel) to form a virtual image in a certain distance, and the virtual image is imaged on a retina through the human eyes. When the optical lens is applied to the waveguide display, the considerations of size and weight of the optical lens in the design is an important issue.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention were acknowledged by a person of ordinary skill in the art.

SUMMARY OF THE INVENTION

The invention provides a display, of which an optical lens has small size, light weight, large viewing angle, and high resolution.

Other objects and advantages of the invention can be further illustrated by the technical features broadly embodied and described as follows.

The object is solved by the features of the independent claims. Preferred embodiments are given in the dependent claims.

In order to achieve one or a portion of or all of the objects or other objects, an embodiment of the invention provides a display including an optical lens and a light valve. The optical lens includes a first lens, a second lens, and a third lens arranged in sequence from a light emitting side to a light incident side. The light valve is disposed at the light incident side. The light valve provides an image beam. The optical lens is configured to receive the image beam. The image beam includes at least one color light. The image beam forms a stop at the light emitting side. The stop has the smallest cross-sectional area of a beam shrinkage of the image beam. A range of an OPD of the image beam on an active surface of the light valve is $-2.0\lambda<OPD<2.0\lambda$, wherein the OPD is an optical path difference at each field of view, and $\lambda$ is a wavelength of each color light.

In some embodiments, the optical lens meets $0.3<B/D<2.5$, wherein B is a total lens length of the optical lens, and D is a clear aperture of the largest lens in the optical lens.

In some embodiments, the optical lens meets $0.1<A/B<3.5$, wherein A is a distance between the stop and the optical lens on an optical axis, and B is a total lens length of the optical lens.

In some embodiments, the optical lens meets $2<(A+C)\times FOV/(B\times D)<30$, wherein A is a distance between the stop and the optical lens on an optical axis, B is a total lens length of the optical lens, C is a distance between the optical lens and the light valve on the optical axis, D is a clear aperture of the largest lens in the optical lens, and FOV is a field of view of the optical lens.

Preferably, the optical lens meets $E/F<1$, a shape of the stop is circular, E is a diameter of the stop, and the light valve is rectangular or square, F is a diagonal length of the light valve.

Preferably, the field of view of the optical lens is 40 degrees.

Preferably, diopters of the first lens, the second lens, and the third lens of the optical lens are positive, negative, and positive in sequence.

Preferably, the first lens of the optical lens is a biconvex lens, the second lens is a biconcave lens, and the third lens is the biconvex lens.

Preferably, the first, the second and the third lenses are plastic aspheric lenses.

Preferably, the first and the third lenses are glass aspheric lenses, and the second lens is a plastic aspheric lens.

Preferably, the optical lens further comprises a fourth lens, located between the third lens and the light valve.

Preferably, diopters of the first lens, the second lens, the third lens, and the fourth lens of the optical lens are negative, positive, negative, and positive in sequence.

Preferably, the first lens of the optical lens is a convex-concave lens and has a convex surface toward the light incident side, the second lens is a biconvex lens, the third lens is a convex-concave lens and has a convex surface toward the light emitting side, and the fourth lens is a biconvex lens.

In some embodiments, the first lens, the second lens, the third lens, and the fourth lens of the optical lens are plastic aspheric lenses.

In some embodiments, on the active surface of the light valve, the range of the OPD of the image beam is $-1.5\lambda<OPD<1.5\lambda$, wherein the OPD is the optical path difference at each field of view, and $\lambda$ is the wavelength of each color light.

In some embodiments, the display may further comprise a first prism disposed between the optical lens and the stop, the image beam leaving the optical lens, passing through the first prism, and being converged toward the stop, and the image beam being diverged after passing through the stop.

In some embodiments, the stop is formed at a coupling inlet of one waveguide element, and the image beam enters into the waveguide element passing through the stop via the coupling inlet, is transmitted to a coupling outlet of the waveguide element, and then is projected to a target.

In some embodiments, a size of a virtual image projected by the optical lens is approximately 190 times a size of the light valve.

In some embodiments, the optical lens meets following conditions: $0.3<B/D<2.5$, $0.1<A/B<3.5$, $2<(A+C)\times FOV/(B\times D)<30$, $E/F<1$, wherein A is a distance between the stop and the optical lens on an optical axis, B is a total lens length of the optical lens, C is a distance between the optical lens and the light valve on the optical axis, D is a clear aperture of the largest lens in the optical lens, and FOV is the field of view of the optical lens, wherein a shape of the stop is circular, E is a diameter of the stop, and the light valve is rectangular or square, and F is a diagonal length of the light valve

Based on the above, the embodiments of the invention have at least one of the following advantages or effects. In the exemplary embodiment of the invention, the design of the display meets the preset specifications, so that the entire length of the display and the optical lens can be shorten, and the appearance of the display becomes smaller. Moreover, when the material of all lenses in the optical lens is considered, the weight of the optical lens becomes lighter. Thereby, the weight of the display becomes lighter. Additionally, to avoid the design of the optical lens will become complicated accordingly when the field of view (FOV) of the waveguide becomes larger; thereby, the size and weight of the display becomes larger and heavier, the display of the invention has the advantages of small size, light weight, large viewing angle, and high resolution. In the exemplary embodiment of the invention, the design of the optical lens of the display meets the preset specifications, and thus the optical lens has small size, light weight, large viewing angle, and high resolution.

Other objectives, features and advantages of the invention will be further understood from the further technological features disclosed by the embodiments of the invention wherein there are shown and described preferred embodiments of this invention, simply by way of illustration of modes best suited to carry out the invention.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram illustrating a waveguide display according to an embodiment of the invention.
FIG. 2A is a diagram showing astigmatic field curvature and distortion of an optical lens of FIG. 1.
FIG. 2B is a diagram showing lateral color of the optical lens of FIG. 1.
FIG. 2C is a diagram showing modulation transfer function curves of the optical lens of FIG. 1.
FIG. 2D is a diagram showing an optical path difference of the optical lens of FIG. 1.
FIG. 2E is a transverse ray fan plot of the optical lens of FIG. 1.

FIG. 3 is a diagram illustrating the waveguide display acc. to another embodiment of the invention.
FIG. 4 is a diagram illustrating the waveguide display acc. to another embodiment of the invention.
FIG. 5 is a diagram illustrating the waveguide display acc. to another embodiment of the invention.
FIG. 6A is a diagram showing astigmatic field curvature and distortion of the optical lens of FIG. 5.
FIG. 6B is a diagram showing lateral color of the optical lens of FIG. 5.
FIG. 6C is a diagram showing modulation transfer function curves of the optical lens of FIG. 5.
FIG. 6D is a diagram showing an optical path difference of the optical lens of FIG. 5.
FIG. 6E is a transverse ray fan plot of the optical lens of FIG. 5.
FIG. 7 is a diagram illustrating the waveguide display acc. to another embodiment of the invention.
FIG. 8 is a diagram illustrating the waveguide display acc. to another embodiment of the invention.

DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

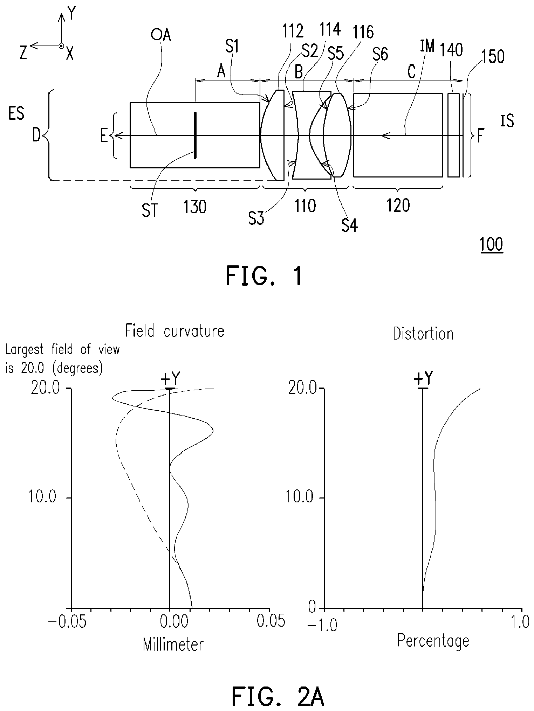

FIG. 1 is a schematic diagram illustrating a waveguide display according to an embodiment of the invention. Referring to FIG. 1, a waveguide display 100 of the embodiment is applied to a head-mounted display device having a waveguide element 130, but the invention is not limited thereto. In the embodiment, the waveguide display 100 includes an optical lens 110, an illumination prism (second prism) 120, the waveguide element 130, and a light valve 150. The light valve 150 is disposed at a light incident side IS opposite to the optical lens 100. The light valve 150 may be a digital micromirror device (DMD), a transflective liquid crystal display (liquid crystal on silicon (LCoS)), or other image display elements. In other embodiments, the light valve 150 may be a transparent spatial light modulator, such as a transparent liquid crystal panel. When using the removable illumination prism 120, the types and species of the light valve 150 are not limited to the invention. The illumination prism 120 is disposed between the optical lens 110 and the light valve 150. An image beam IM provided by the light valve 150 passes through the illumination prism 120 and enters into the optical lens 110. The optical lens 110 is adapted to receive the image beam IM. In the embodiment, a cover glass 140 is disposed between the light valve 150 and the illumination prism 120 to protect the light valve 150 from the effects of dust.

In the embodiment, after the image beam IM passing through the optical lens 110, a stop ST is formed at a light emitting side ES opposite to the optical lens 110. In the embodiment, the stop ST formed by the image beam IM is located in the waveguide element 130. The stop ST has the smallest cross-sectional area of a beam shrinkage of the image beam IM. For instance, in the embodiment, on a reference plane formed by an X-axis and a Y-axis, the stop ST is circular, for example, and the diameter size thereof in the X-axis direction is consistent with that in the Y-axis. In the embodiment, the image beam IM forms the stop ST after passing through the optical lens 110, and the stop ST has the smallest cross-sectional area of the beam shrinkage of the image beam IM. Thus, the image beam IM is shrunk to the stop ST after passing through the optical lens 110, and is dispersed after passing through the stop ST. In the embodiment, the image beam IM is transmitted in the waveguide element 130 after the stop ST, and then is projected to a preset target. In one embodiment, the preset target is human eyes, for example.

In the embodiment, one condition is that the optical lens 110 meets $0.3<B/D<2.5$, wherein B is a total lens length of the optical lens 110, and D is a clear aperture of the largest lens in the optical lens 110. In the embodiment, D is the clear aperture of the first lens 112, for example. In the embodiment, another condition is that the optical lens 110

meets 0.1<A/B<3.5, wherein A is a distance between the stop ST and the optical lens 110 on an optical axis OA, i.e., a distance between the stop ST and a light emitting surface of the first lens 112. In the embodiment, yet another condition is that the optical lens 110 meets 2<(A+C)×FOV/(B×D)<30, wherein C is a distance between the optical lens 110 and the light valve 150 on the optical axis OA, which may be a distance between a surface of the illumination prism 120 close to the light emitting side ES and the light valve 150 on the optical axis OA, and FOV is a field of view of the optical lens 110. In the embodiment, yet another condition is that the optical lens 110 meets E/F<1, wherein a shape of the stop ST is circular, E is a diameter of the stop ST, the light valve 150 is rectangular or square, and F is a diagonal length of the light valve 150. In the embodiment, yet another condition is that the optical lens 110 simultaneously meets 0.3<B/D<2.5, 0.1<A/B<3.5, 2<(A+C)×FOV/(B×D)<30, and E/F<1. The aforementioned parameters A, B, C, D, E, F, and FOV are as defined above. In the embodiment, the aforementioned parameters A, B, C, D, E, and F are respectively 15.5 millimeters (mm), 7.51 mm, 10.4 mm, 8.6 mm, 3.76 mm, and 7.93 mm, for example. The values of these parameters are not intended to limit the invention. In the embodiment, the field of view of the optical lens 110 is 40 degrees.

In the embodiment, the optical lens 110 includes the first lens 112, a second lens 114, and a third lens 116 arranged in sequence from the light emitting side ES to the light incident side IS. Diopters of the first lens 112, the second lens 114, and the third lens 116 are positive, negative, and positive in sequence. In the embodiment, the first lens 112 is a biconvex lens, the second lens 114 is a biconcave lens, and the third lens 116 is a biconvex lens. In the embodiment, the first lens 112 and the third lens 116 are glass aspheric lenses, and the second lens 114 is a plastic aspheric lens. In another embodiment, the first lens 112, the second lens 114, and the third lens 116 are plastic aspheric lenses.

An embodiment of the optical lens 110 is provided below. It should be noted that data provided below is not used for limiting the invention, and those skilled in the art may suitably modify parameters or settings of the following embodiment with reference of the invention without departing from the scope of the invention.

Table 1

| Element | Surface | Curvature radius (mm) | Interval (mm) | Refractive index | Abbe number |
|---|---|---|---|---|---|
| First lens 112 | S1 | 8.44 | 2.02 | 1.8 | 40.88 |
| | S2 | -20.71 | 1.26 | | |
| Second lens 114 | S3 | -16.64 | 1.00 | 1.63 | 23.33 |
| | S4 | 3.85 | 0.99 | | |
| Third lens 116 | S5 | 9.87 | 1.89 | 1.85 | 40.39 |
| | S6 | -12.95 | 0.25 | | |

Referring to FIG. 1 and Table 1, the surface of each lens (including the first lens 112 to the third lens 116) are listed in Table 1. For instance, a surface S1 is the surface of the first lens 112 facing the light emitting side ES, and a surface S2 is the surface of the first lens 112 facing the light incident side IS, and so on. Additionally, an interval represents a linear distance between two adjacent surfaces on the optical axis OA. For instance, the interval corresponding to the surface S1 is the linear distance between the surface S1 and the surface S2 on the optical axis OA, and the interval corresponding to the surface S2 is the linear distance between the surface S2 and the surface S3 on the optical axis OA, and so on.

In the embodiment, the first lens 112, the second lens 114, and the third lens 116 may be aspheric lenses. A formula of the aspheric lens is as follows:

$$X = \frac{Y^2}{R(1+\sqrt{1-(1+k)*Y^2/R^2})} + A_2Y^2 + A_4Y^4 + A_6Y^6 + A_8Y^8 + A_{10}Y^{10} + A_{12}Y^{12}...$$

In the above formula, X is a sag along the optical axis OA, and R is a radius of an osculating sphere, i.e., a curvature radius close to the optical axis OA (e.g. the curvature radius listed in Table 1). k is a conic coefficient, Y is an aspheric height, i.e., the height from the center to the edge of the lens, and coefficients A2, A4, A6, A8, A10, and A12 are aspheric coefficients. In the embodiment, the coefficient A2 is 0. The values listed in Table 2 below are the parameter values of the surface of each lens.

Table 2

|  | S1 | S2 | S3 | S4 | S5 | S6 |
|---|---|---|---|---|---|---|
| k | 0 | 0 | -3.38E-001 | -3.20E+000 | -4.99E+000 | 0 |
| A4 | -1.10E-004 | 9.48E-004 | -2.19E-003 | -1.18E-003 | 2.45E-004 | 7.06E-004 |
| A6 | 1.23E-005 | -5.98E-005 | 2.08E-004 | 1.54E-004 | -4.95E-005 | -3.66E-005 |
| A8 | -1.06E-006 | 3.44E-006 | -5.46E-006 | -1.17E-006 | 6.20E-006 | 4.64E-006 |
| A10 | 3.74E-008 | -1.02E-007 | -5.52E-008 | -2.32E-007 | -2.96E-007 | -2.54E-007 |
| A12 | 1.30E-012 | 1.61E-009 | 3.14E-009 | 6.60E-009 | 5.40E-009 | 4.93E-009 |

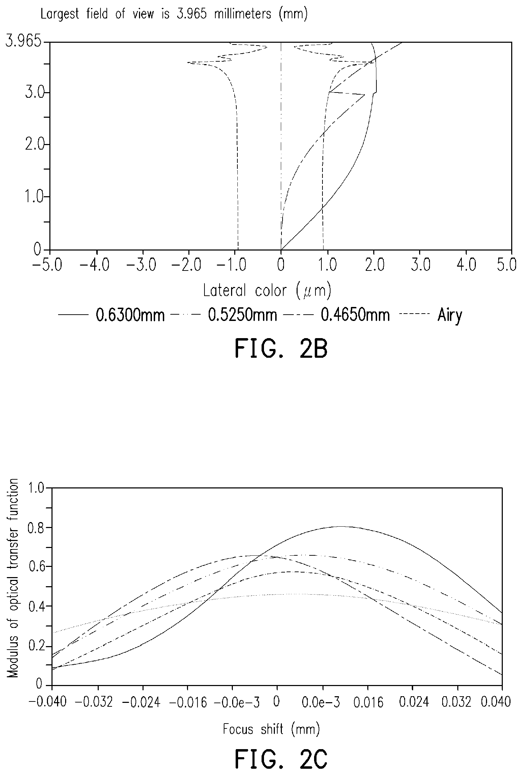

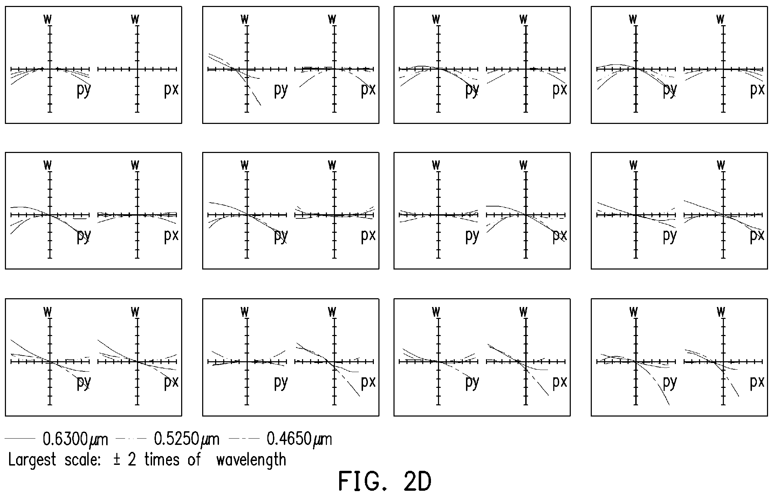

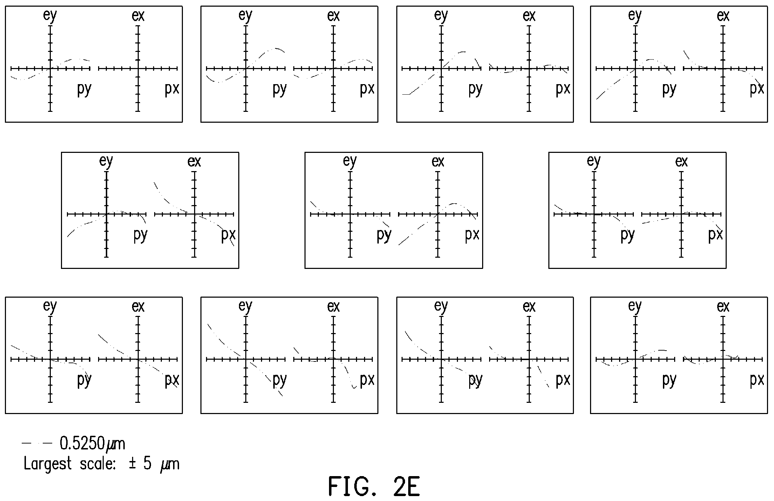

FIG. 2A is a diagram showing astigmatic field curvature and distortion of the optical lens of FIG. 1. FIG. 2B is a diagram showing lateral color of the optical lens of FIG. 1, which is an analog data diagram made based on the light with the wavelength of 465 nm, 525 nm, and 630 nm, and the ordinate is an airy disc. FIG. 2C is a diagram showing modulation transfer function curves of the optical lens of FIG. 1, wherein the abscissa is a focus shift, and the ordinate is a modulus of the OTF. FIG. 2D is a diagram showing the optical path difference of the optical lens of FIG. 1. FIG. 2E is a transverse ray fan plot of the optical lens of FIG. 1, based on 525 nm, for example. The figures shown in FIG. 2A to FIG. 2E are within in the standard range. Thus, it can be verified that the optical lens 110 of the embodiment can achieve good effects of imaging. Additionally, from FIG. 2D, on the active surface of the light valve 150, the range of the OPD of the image beam IM is $-2.0\lambda < OPD < 2.0\lambda$, wherein the OPD is the optical path difference at each field of view, $\lambda$ is the wavelength of each color light, and the image beam IM includes red light, green light, and blue light. The active surface of the light valve 150 is the surface where the image beam IM emits. Further explanation, the design of the optical path difference, those skilled in the art can easily understand that when designing the optical lens, the optical path difference of the image beam at each field of view to be provided by the image source is reversely obtained from a light plane by a method of optical analogy. In the embodiment, the design of the optical lens 110 meets the preset specifications, which can at least resolve the image with a resolution of 931 p/mm, and thus, the optical lens 110 has small size, light weight, large viewing angle, and high resolution.

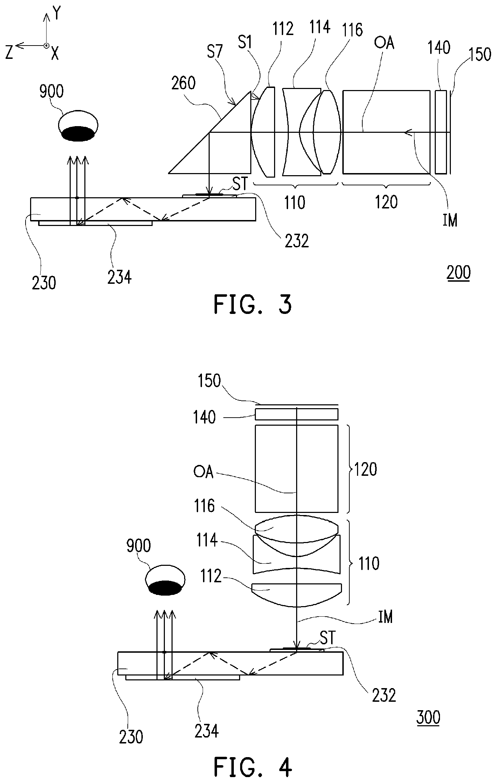

FIG. 3 is a schematic diagram illustrating the waveguide display according to yet another embodiment of the invention. Referring to FIG. 3, a waveguide display 200 of the embodiment is similar to the waveguide display 100 of FIG. 1, but the main difference between the two is that the waveguide display 200 further includes the design of a deflecting prism 260 (first lens) and a waveguide element 230, for example. In the embodiment, the deflecting prism 260 is disposed between the optical lens 110 and the stop ST. The image beam IM leaves the optical lens 110, a transmission direction thereof is changed after passing through the deflecting prism 260, and then the image beam IM is converged toward the stop ST. The image beam IM is dispersed after passing through the stop ST. In the embodiment, the waveguide element 230 includes a coupling inlet 232 and a coupling outlet 234. The coupling inlet 232 and the coupling outlet 234 are a surface area of the waveguide element 230 where the image beam incidents thereto and a surface area of the waveguide element 230 where the image beam leaves therefrom. The stop ST is formed at the coupling inlet 232 of the waveguide element 230. The image beam IM enters into the waveguide element 230 passing through the stop ST via the coupling inlet 232, is transmitted to the coupling outlet 234 of the waveguide element 230, and then is projected to a target 900. The projection target 900 herein is human eyes, for example.

In the embodiment, one condition is that the optical lens 110 meets 0.3<B/D<2.5; another condition is that the optical lens 110 meets 0.1<A/B<3.5; yet another condition is that the optical lens 110 meets 2<(A+C)×FOV/(B×D)<30; yet another condition is that the optical lens 110 meets E/F<1; yet another condition is that the optical lens 110 simultaneously meets 0.3<B/D<2.5, 0.1<A/B<3.5, 2<(A+C)×FOV/(B×D)<30, and E/F<1. A is the distance between the stop ST and the optical lens 110 on the optical axis OA. In the embodiment, A is the sum of the distance between the surface S1 of the first lens 112 and a surface S7 of the deflecting prism 260 on the optical axis OA and the distance between the surface S7 of the deflecting prism 260 and the surface of the stop ST on the optical axis OA. In the embodiment, the aforementioned parameters A, B, C, D, E, and F are respectively 11.8 mm, 7.51 mm, 10.4 mm, 8.6 mm, 3.76 mm, and 7.93 mm, for example. The values of these parameters are not intended to limit the invention.

FIG. 4 is a schematic diagram illustrating the waveguide display according to yet another embodiment of the invention. Referring to FIG. 4, a waveguide display 300 of the embodiment is similar to the waveguide display 100 of FIG. 1, but the main difference between the two is that the design of the waveguide element 230, for example. Additionally, in the embodiment, there is no glass block or lens between the stop ST and the first lens 112. After leaving the optical lens 110, the image beam IM is transmitted in the air and then is converged toward the stop ST.

In the embodiment, one condition is that the optical lens 110 meets 0.3<B/D<2.5; another condition is that the optical lens 110 meets 0.1<A/B<3.5; yet another condition is that the optical lens 110 meets 2<(A+C)×FOV/(B×D)<30;

yet another condition is that the optical lens 110 meets E/F<1; yet another condition is that the optical lens 110 simultaneously meets 0.3<B/D<2.5, 0.1<A/B<3.5, 2<(A+C)×FOV/(B×D)<30, and E/F<1. In the embodiment, the aforementioned parameters A, B, C, D, E, and F are respectively 8 mm, 7.51 mm, 10.4 mm, 8.6 mm, 3.76 mm, and 7.93 mm, for example. The values of these parameters are not intended to limit the invention.

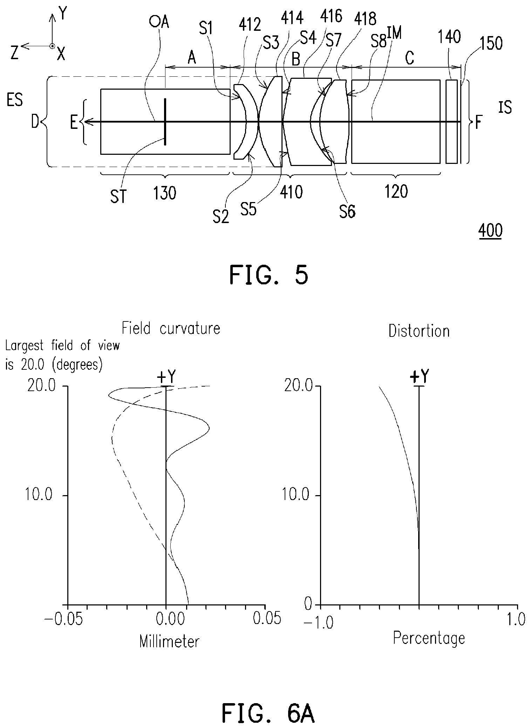

FIG. 5 is a schematic diagram illustrating the waveguide display according to yet another embodiment of the invention. Referring to FIG. 5, a waveguide display 400 of the embodiment is a head-mounted display device having the waveguide element 130, for example, but the invention is not limited thereto. In the embodiment, the waveguide display 400 includes an optical lens 410, the illumination prism (second prism) 120, the waveguide element 130, and the light valve 150. The light valve 150 is disposed at the light incident side IS. The illumination prism 120 is disposed between the optical lens 410 and the light valve 150. The image beam IM provided by the light valve 150 passes through the illumination prism 120 and enters into the optical lens 410. The optical lens 410 is adapted to receive the image beam IM. In the embodiment, the cover glass 140 is disposed between the light valve 150 and the illumination prism 120 to protect the light valve 150.

In the embodiment, the image beam IM forms the stop ST at the light emitting side ES after passing through the optical lens 410. The stop ST has the smallest cross-sectional area of the beam shrinkage of the image beam IM. In the embodiment, the image beam IM enters into the waveguide element 130 after passing through the stop ST, and then is projected to the preset target. In one embodiment, the preset target is human eyes, for example.

In the embodiment, one condition is that the optical lens 410 meets 0.3<B/D<2.5, wherein B is a total lens length of the optical lens 410, and D is a clear aperture of the largest lens in the optical lens 410. In the embodiment, D is the clear aperture of a second lens 414, for example. In the embodiment, another condition is that the optical lens 410 meets 0.1<A/B<3.5, wherein A is the distance between the stop ST and the optical lens 410 on the optical axis OA. In the embodiment, yet another condition is that the optical lens 410 meets 2<(A+C)×FOV/(B×D)<30, wherein C is the distance between the optical lens 410 and the light valve 150 on the optical axis OA, and FOV is the field of view of the optical lens 410. In the embodiment, yet another condition is that the optical lens 410 meets E/F<1, wherein the shape of the stop ST is circular, E is the diameter of the stop ST, the light valve 150 is rectangular or square, and F is the diagonal length of the light valve 150. In the embodiment, yet another condition is that the optical lens 410 simultaneously meets 0.3<B/D<2.5, 0.1<A/B<3.5, 2<(A+C)×FOV/(B×D)<30, and E/F<1. The aforementioned parameters A, B, C, D, E, F, and FOV are as defined above. In the embodiment, the aforementioned parameters A, B, C, D, E, and F are respectively 12.49 mm, 11.55 mm, 10.4 mm, 8.4 mm, 3.84 mm, and 7.93 mm, for example. The values of these parameters are not intended to limit the invention. In the embodiment, the field of view of the optical lens 410 is 40 degrees.

In the embodiment, the optical lens 410 includes the first lens 412, the second lens 414, a third lens 416, and a fourth lens 418 arranged in sequence from the light emitting side ES to the light incident side IS. The diopters of the first lens 412, the second lens 414, the third lens 416, and the fourth lens 418 are negative, positive, negative, and positive in sequence. In the embodiment, the first lens 412 is a convex-concave lens and has a convex surface toward the light incident side IS, the second lens 414 is a biconvex lens, the third lens 416 is a convex-concave lens and has a convex surface toward the light emitting side ES, and the fourth lens 418 is a biconvex lens. In the embodiment, the first lens 412, the second lens 414, the third lens 416, and the fourth lens 418 are plastic aspheric lenses, but is not limited thereto.

For instance, the optical lens 410 has four lenses, but is not limited thereto. The diameter of the stop ST is about 4 mm, close to the size of the pupil of normal human eyes (about 3-6 mm). The size of the stop ST is also close to a width of a short side of the light valve 150 (e.g., 3.888 mm), but smaller than the diagonal of the light valve 150 (e.g., 7.93 mm), wherein the diagonal of the light valve 150 represents an image circle IMA of the optical lens 410. The light valve is to use a 0.3-inch 720P DMD device, for example. In the design of the optical lens 410, the human eyes can see which is equivalent to a 57-inch virtual image outside 2 meters (M), and the magnification is about 190 times at this time.

Additionally, the optical lens 410 in the embodiment has a relational expression between the focal distance and the image height as follows: image height = focal distance x tan (half field of view), wherein the image height is 3.965 mm, for example. The field of view is designed to be 40 degrees, and the half field of view is 20 degrees. Thereby, the effective focal distance of the optical lens 410 is approximately 10.89 mm.

An embodiment of the optical lens 410 is provided below. It should be noted that data provided below is not used for limiting the invention, and those skilled in the art may suitably modify parameters or settings of the following embodiment with reference of the invention without departing from the scope of the invention.

Table 3

| Element | Surface | Curvature radius (mm) | Interval (mm) | Refractive index | Abbe number |
|---|---|---|---|---|---|
| First lens 412 | S1 | -3.71 | 1.15 | 1.63 | 23.33 |
| | S2 | -4.74 | 0.10 | | |

(continued)

| Element | Surface | Curvature radius (mm) | Interval (mm) | Refractive index | Abbe number |
|---------|---------|----------------------|---------------|------------------|-------------|
| Second lens 414 | S3 | 6.51 | 2.23 | 1.53 | 55.74 |
| | S4 | -40.49 | 0.10 | | |
| Third lens 416 | S5 | 6.30 | 2.50 | 1.63 | 23.33 |
| | S6 | 2.57 | 0.92 | | |
| Fourth lens 418 | S7 | 6.44 | 2.74 | 1.53 | 55.74 |
| | S8 | -13.30 | 0.25 | | |

Referring to FIG. 5 and Table 3, the surface of each lens (including the first lens 412 to the fourth lens 418) are listed in Table 3. For instance, the surface S1 is the surface of the first lens 412 facing the light emitting side ES, and the surface S2 is the surface of the first lens 412 facing the light incident side IS, and so on. Additionally, the interval represents the linear distance between two adjacent surfaces on the optical axis OA. For instance, the interval corresponding to the surface S1 is the linear distance between the surface S1 and the surface S2 on the optical axis OA, and the interval corresponding to the surface S2 is the linear distance between the surface S2 and the surface S3 on the optical axis OA, and so on.

In the embodiment, the first lens 412, the second lens 414, the third lens 416, and the fourth lens 418 may be aspheric lenses. A formula of the aspheric lens is as follows:

$$X = \frac{Y^2}{R(1+\sqrt{1-(1+k)*Y^2/R^2})} + A_2Y^2 + A_4Y^4 + A_6Y^6 + A_8Y^8 + A_{10}Y^{10} + A_{12}Y^{12}...$$

In the above formula, X is the sag along the optical axis OA, and R is the radius of the osculating sphere, i.e., the curvature radius close to the optical axis OA (e.g. the curvature radius listed in Table 1). k is the conic coefficient, Y is the aspheric height, i.e., the height from the center to the edge of the lens, and the coefficients A2, A4, A6, A8, A10, and A12 are aspheric coefficients. In the embodiment, the coefficient A2 is 0. The values listed in Table 4 below are the parameter values of the surface of each lens.

Table 4

| | S1 | S2 | S3 | S4 | S5 | S6 | S7 | S8 |
|-----|----|----|----|----|----|----|----|-----|
| k | -7.13E-001 | 0.00E+000 | 0.00E+000 | 0.00E+000 | -3.38E-001 | -2.45E+000 | -3.58E+000 | 0.00E+000 |
| A4 | 2.95E-003 | 6.13E-004 | -1.66E-004 | 2.43E-003 | -5.24E-003 | -1.61E-004 | 1.64E-003 | 1.42E-003 |
| A6 | -4.78E-004 | -9.29E-005 | -2.08E-005 | -1.77E-004 | 1.87E-004 | 3.33E-005 | -5.77E-005 | -4.97E-005 |
| A8 | 3.99E-005 | 6.10E-006 | -5.94E-007 | 6.03E-006 | -1.00E-006 | 6.44E-006 | 6.44E-006 | 6.60E-006 |
| A10 | -2.13E-006 | -2.58E-008 | 3.37E-008 | -1.08E-007 | -1.42E-007 | -4.02E-007 | -3.34E-007 | -3.52E-007 |
| A12 | 5.33E-008 | -5.21E-033 | -5.21E-033 | 1.61E-009 | 3.14E-009 | 6.60E-009 | 5.40E-009 | 4.93E-009 |

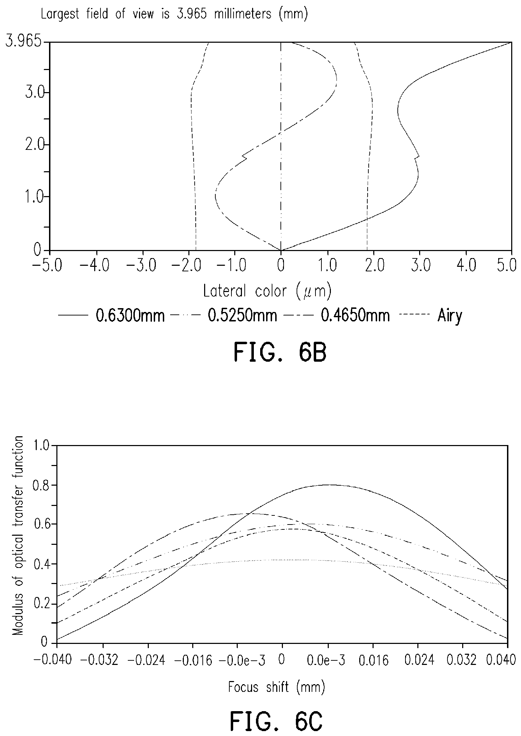

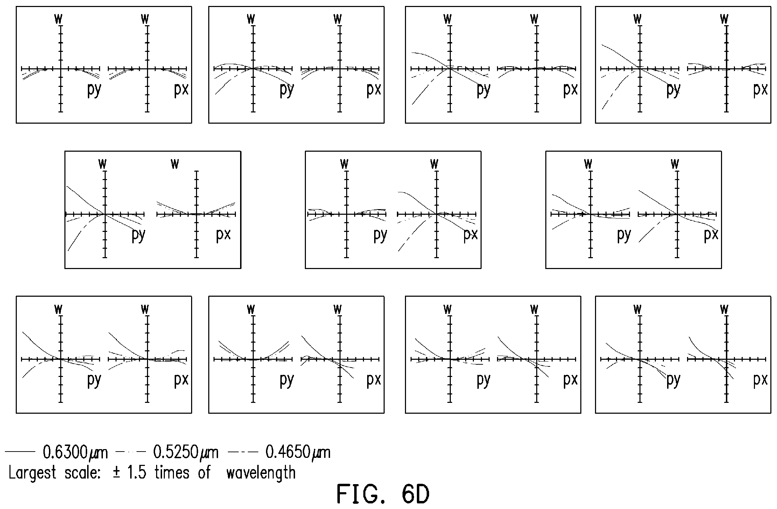

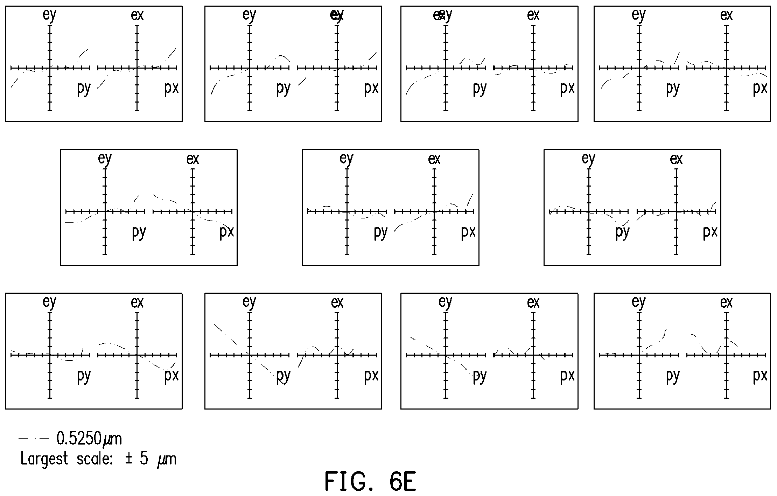

FIG. 6A is a diagram showing astigmatic field curvature and distortion of the optical lens of FIG. 5. FIG. 6B is a diagram showing lateral color of the optical lens of FIG. 5, which is an analog data diagram made based on the light with the wavelength of 465 nm, 525 nm, and 630 nm, and the ordinate is the airy disc. FIG. 6C is a diagram showing modulation transfer function curves of the optical lens of FIG. 5, wherein the abscissa is the focus shift, and the ordinate is the modulus of the OTF. FIG. 6D is a diagram showing an optical path difference of the optical lens of FIG. 5. FIG. 6E is a transverse ray fan plot of the optical lens of FIG. 5, based on 525 nm, for example. The figures shown in FIG. 6A to FIG. 6E are within in the standard range. Thus, it can be verified that the optical lens 410 of the embodiment can achieve good effects of imaging. Additionally, from FIG. 6D, on the active surface of the light valve 150, the range of the OPD of the image beam IM is $-1.5\lambda < OPD < 1.5\lambda$, wherein the OPD is the optical path difference at each field of view, $\lambda$ is the wavelength of each color light, and the image beam IM includes red light, green light, and blue light. In the embodiment, the design of the optical lens 410 meets the preset specifications, and thus, the optical lens 410 has small size, light weight, large viewing angle, and high resolution.

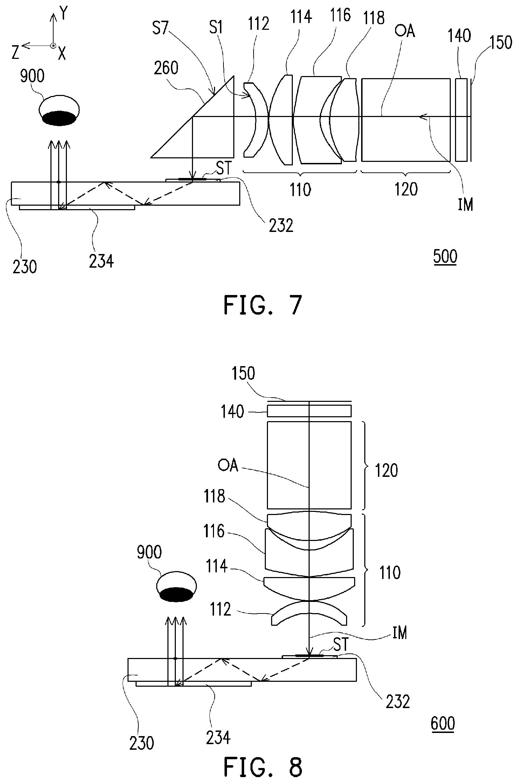

FIG. 7 is a schematic diagram illustrating the waveguide display according to yet another embodiment of the invention. Referring to FIG. 7, a waveguide display 500 of the embodiment is similar to the waveguide display 400 of FIG. 5, but the main difference between the two is that the waveguide display 500 further includes the design of the deflecting prism 260 (first lens) and the waveguide element 230, for example. In the embodiment, the deflecting prism 260 is disposed between the optical lens 410 and the stop ST. The image beam IM leaves the optical lens 410, the transmission direction thereof is changed after passing through the deflecting prism 260, and then the image beam IM is converged toward the stop ST. The image beam IM is dispersed after passing through the stop ST. In the embodiment, the waveguide element 230 includes the coupling inlet 232 and the coupling outlet 234. The stop ST is formed at the coupling inlet 232 of the waveguide element 230. The image beam IM enters into the waveguide element 230 passing through the stop ST via the coupling inlet 232, is transmitted to the coupling outlet 234 of the waveguide element 230, and then is projected to the target 900. The projection target 900 herein is human eyes, for example.

In the embodiment, one condition is that the optical lens 410 meets $0.3<B/D<2.5$; another condition is that the optical lens 410 meets $0.1<A/B<3.5$; yet another condition is that the optical lens 410 meets $2<(A+C)\times FOV/(B\times D)<30$; yet another condition is that the optical lens 410 meets $E/F<1$; yet another condition is that the optical lens 410 simultaneously meets $0.3<B/D<2.5$, $0.1<A/B<3.5$, $2<(A+C)\times FOV/(B\times D)<30$, and $E/F<1$. A is the distance between the stop ST and the optical lens 410 on the optical axis OA. In the embodiment, A is the sum of the distance between the surface S1 of the first lens 412 and the surface S7 of the deflecting prism 260 on the optical axis OA and the distance between the surface S7 of the deflecting prism 260 and the surface of the stop ST on the optical axis OA. In the embodiment, the aforementioned parameters A, B, C, D, E, and F are respectively 9.6 mm, 11.55 mm, 10.4 mm, 8.4 mm, 3.84 mm, and 7.93 mm, for example. The values of these parameters are not intended to limit the invention.

FIG. 8 is a schematic diagram illustrating the waveguide display according to yet another embodiment of the invention. Referring to FIG. 8, a waveguide display 600 of the embodiment is similar to the waveguide display 400 of FIG. 5, but the main difference between the two is that the design of the waveguide element 230, for example. Additionally, in the embodiment, there is no glass block or lens between the stop ST and the first lens 412. After leaving the optical lens 410, the image beam IM is transmitted in the air and then is converged toward the stop ST.

In the embodiment, one condition is that the optical lens 410 meets $0.3<B/D<2.5$; another condition is that the optical lens 410 meets $0.1<A/B<3.5$; yet another condition is that the optical lens 410 meets $2<(A+C)\times FOV/(B\times D)<30$; yet another condition is that the optical lens 410 meets $E/F<1$; yet another condition is that the optical lens 410 simultaneously meets $0.3<B/D<2.5$, $0.1<A/B<3.5$, $2<(A+C)\times FOV/(B\times D)<30$, and $E/F<1$. In the embodiment, the aforementioned parameters A, B, C, D, E, and F are respectively 6.45 mm, 11.55 mm, 10.4 mm, 8.4 mm, 3.84 mm, and 7.93 mm, for example. The values of these parameters are not intended to limit the invention.

In summary, the embodiments of the invention have at least one of the following advantages or effects. In the exemplary embodiment of the invention, the design of the optical lens meets the preset specifications, and thus, the optical lens has small size, light weight, large viewing angle, and high resolution.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

**Claims**

1. A display, comprising an optical lens (110) and a light valve (150), the optical lens (110) comprising:

   a first lens (112), a second lens (114), and a third lens (116), arranged in sequence from a light emitting side to a light incident side;
   the light valve (150), disposed at the light incident side, the light valve (150) providing an image beam (IM), wherein the image beam (IM) comprises at least one color light,
   the optical lens (110) is configured to receive the image beam (IM), and the image beam (IM) forms a stop (ST) at the light emitting side, the stop (ST) has the smallest cross-sectional area of a beam shrinkage of the image beam (IM), and a range of an OPD of the image beam (IM) on an active surface of the light valve is $-2.0\lambda<OPD<2.0\lambda$, wherein the OPD is an optical path difference at each field of view, and $\lambda$ is a wavelength of each color light.

2. The display as claimed in claim 1, wherein

   the optical lens (110) meets $0.3<B/D<2.5$, wherein B is a total lens length of the optical lens (110), and D is a clear aperture of the largest lens in the optical lens (110); and/or wherein
   the optical lens (110) meets $0.1<A/B<3.5$, wherein A is a distance between the stop (ST) and the optical lens (110) on an optical axis, and B is a total lens length of the optical lens (110); and/or wherein
   the optical lens (110) meets $2<(A+C)\times FOV/(B\times D)<30$, wherein A is a distance between the stop (ST) and the optical lens (110) on an optical axis, B is a total lens length of the optical lens (110), C is a distance between the optical lens (110) and the light valve (150) on the optical axis, D is a clear aperture of the largest lens in the optical lens (110), and FOV is a field of view of the optical lens (110); and/or wherein
   the optical lens (110) meets $E/F<1$, wherein a shape of the stop (ST) is circular, E is a diameter of the stop (ST), and the light valve (150) is rectangular or square, F is a diagonal length of the light valve (150).

3. The display as claimed in claim 1 or 2, wherein the field of view of the optical lens (110) is 40 degrees.

4. The display as claimed in claim 1, 2 or 3, wherein diopters of the first lens (112), the second lens (114), and the third lens (116) of the optical lens (110) are positive, negative, and positive in sequence.

5. The display as claimed in any one of the preceding claims, the first lens (112) of the optical lens (110) is a biconvex lens, the second lens (114) is a biconcave lens, and the third lens (116) is the biconvex lens.

6. The display as claimed in any one of the preceding claims,

   wherein the first lens (112), the second lens (114), and the third lens (116) of the optical lens (110) are plastic aspheric lenses; or
   wherein the first lens (112) and the third lens (116) are glass aspheric lenses, and the second lens (114) is a plastic aspheric lens.

7. The display as claimed in any one of the preceding claims, the optical lens (110) further comprising a fourth lens (418), located between the third lens (116) and the light valve (150).

8. The display as claimed in claim 7, wherein diopters of the first lens (112), the second lens (114), the third lens (116), and the fourth lens (418) of the optical lens (110) are negative, positive, negative, and positive in sequence.

9. The display as claimed in claim 7 or 8, wherein the first lens (112) of the optical lens (110) is a convex-concave lens and has a convex surface toward the light incident side, the second lens (114) is a biconvex lens, the third lens (116) is a convex-concave lens and has a convex surface toward the light emitting side, and the fourth lens (418) is a biconvex lens.

10. The display as claimed in claim 7, 8 or 9, wherein the first lens (112), the second lens (114), the third lens (116), and the fourth lens (418) of the optical lens are plastic aspheric lenses.

11. The display as claimed in claim 7, 8, 9 or 10, wherein on the active surface of the light valve (150), the range of the OPD of the image beam (IM) is $-1.5\lambda<OPD<1.5\lambda$, wherein the OPD is the optical path difference at each field of view, and λ is the wavelength of each color light.

12. The display as claimed in any one of the preceding claims, further comprising a first prism disposed between the optical lens (110) and the stop (ST), the image beam (IM) leaving the optical lens (110), passing through the first prism, and being converged toward the stop (ST), and the image beam (IM) being diverged after passing through the stop (ST).

13. The display as claimed in any one of the preceding claims, wherein the stop (ST) is formed at a coupling inlet (232) of one waveguide element (230), and the image beam (IM) enters into the waveguide element (230) passing through the stop (ST) via the coupling inlet (232), is transmitted to a coupling outlet (234) of the waveguide element (230), and then is projected to a target.

14. The display as claimed in any one of the preceding claims, wherein a size of a virtual image projected by the optical lens (110) is approximately 190 times a size of the light valve (150).

15. The display as claimed in any one of the preceding claims, wherein the optical lens (110) meets following conditions:

$$0.3 < B/D < 2.5,$$

$$0.1 < A/B < 3.5,$$

$$2 < (A+C) \times FOV/(B \times D) < 30,$$

$$E/F < 1,$$

wherein A is a distance between the stop (ST) and the optical lens (110) on an optical axis, B is a total lens length of the optical lens (110), C is a distance between the optical lens (110) and the light valve (150) on the optical axis, D is a clear aperture of the largest lens in the optical lens (110), and FOV is the field of view of the optical lens (110), wherein a shape of the stop (ST) is circular, E is a diameter of the stop (ST), and the light valve (150) is rectangular or square, and F is a diagonal length of the light valve (150).

FIG. 1

FIG. 2A

Largest field of view is 3.965 millimeters (mm)

Lateral color (μm)

—— 0.6300mm —·— 0.5250mm ——— 0.4650mm ······ Airy

## FIG. 2B

Focus shift (mm)

## FIG. 2C

FIG. 2D

—— 0.6300 μm —·— 0.5250 μm ——— 0.4650 μm wavelength
Largest scale: ± 2 times of

— · — 0.5250 μm
Largest scale: ± 5 μm

FIG. 2E

FIG. 3

FIG. 4

FIG. 5

FIG. 6A

Largest field of view is 3.965 millimeters (mm)

—— 0.6300mm — · — 0.5250mm —— — 0.4650mm ····· Airy

## FIG. 6B

## FIG. 6C

——— 0.6300 μm — · — 0.5250 μm —·— 0.4650 μm
Largest scale: ± 1.5 times of wavelength

FIG. 6D

– – 0.5250μm
Largest scale: ± 5 μm

FIG. 6E

FIG. 7

FIG. 8

Europäisches
Patentamt

European
Patent Office

Office européen
des brevets

## EUROPEAN SEARCH REPORT

**Application Number**

EP 18 20 4625

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 96/05532 A1 (VIRTUALITY IP LTD [GB]; MARSHALL IAN [GB]) 22 February 1996 (1996-02-22) * pages 9-30 * | 1-15 | INV. G02B27/00 G02B9/16 G02B9/34 G02B25/00 G02B27/01 |
| X | US 6 999 239 B1 (MARTINS RICARDO F [US] ET AL) 14 February 2006 (2006-02-14) * column 5, lines 6-34; figure 2 * | 1 | |
| X | US 2016/320619 A1 (WATANABE NOBUAKI [JP]) 3 November 2016 (2016-11-03) * paragraphs [0025] - [116+] * | 1 | |
| X | US 2014/218806 A1 (ISHIZUKA KENICHI [JP]) 7 August 2014 (2014-08-07) * paragraphs [0045] - [0095] * | 1 | |

TECHNICAL FIELDS
SEARCHED    (IPC)

G02B

The present search report has been drawn up for all claims

| Place of search | Date of completion of the search | Examiner |
|---|---|---|
| Munich | 16 May 2019 | Stemmer, Michael |

EPO FORM 1503 03.82 (P04C01)

## ANNEX TO THE EUROPEAN SEARCH REPORT
## ON EUROPEAN PATENT APPLICATION NO.

EP 18 20 4625

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2019

| Patent document cited in search report | | Publication date | Patent family member(s) | | Publication date |
|---|---|---|---|---|---|
| WO 9605532 | A1 | 22-02-1996 | AU | 3187395 A | 07-03-1996 |
| | | | CA | 2197175 A1 | 22-02-1996 |
| | | | DE | 69503640 D1 | 27-08-1998 |
| | | | DE | 69503640 T2 | 25-02-1999 |
| | | | EP | 0775327 A1 | 28-05-1997 |
| | | | JP | H10504115 A | 14-04-1998 |
| | | | US | 5739955 A | 14-04-1998 |
| | | | WO | 9605532 A1 | 22-02-1996 |
| US 6999239 | B1 | 14-02-2006 | NONE | | |
| US 2016320619 | A1 | 03-11-2016 | CN | 105593745 A | 18-05-2016 |
| | | | JP | 6387967 B2 | 12-09-2018 |
| | | | JP | WO2015050194 A1 | 09-03-2017 |
| | | | US | 2016320619 A1 | 03-11-2016 |
| | | | WO | 2015050194 A1 | 09-04-2015 |
| US 2014218806 | A1 | 07-08-2014 | CN | 103765292 A | 30-04-2014 |
| | | | EP | 2749929 A1 | 02-07-2014 |
| | | | JP | 5851157 B2 | 03-02-2016 |
| | | | JP | 2013045020 A | 04-03-2013 |
| | | | US | 2014218806 A1 | 07-08-2014 |
| | | | WO | 2013027855 A1 | 28-02-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711362602